Europäisches Patentamt

European Patent Office

Office européen des brevets

(11) Veröffentlichungsnummer: **0 198 473**
**A2**

(19)

(12) **EUROPÄISCHE PATENTANMELDUNG**

(21) Anmeldenummer: **86105181.1**

(51) Int. Cl.⁴: **B 29 C 45/74**

(22) Anmeldetag: **15.04.86**

(30) Priorität: **15.04.85 DE 3513410**
    **31.12.85 DE 3546415**

(71) Anmelder: **Hehl, Karl, Arthur-Hehl-Strasse 32,
D-7298 Lossburg-1 (DE)**

(43) Veröffentlichungstag der Anmeldung: **22.10.86**
**Patentblatt 86/43**

(72) Erfinder: **Hehl, Karl, Arthur-Hehl-Strasse 32,
D-7298 Lossburg-1 (DE)**

(84) Benannte Vertragsstaaten: **AT CH DE FR GB IT LI NL**

(74) Vertreter: **Mayer, Friedrich, Dr. et al, Patentanwälte Dr.
Mayer & Frank Westliche 24, D-7530 Pforzheim (DE)**

(54) **Plastifiziereinheit einer Kunststoff-Spritzgiessmaschine.**

(57) Als Widerstandsheizungen für die Plastifiziereinheit finden zu Heizwendeln (11) gebogene, dem zentripetalen Druck von Schalen (11c) unterworfene Flachrohr-Heizkörper Verwendung. Heizleiterfreie Endabschnitte (11e) der Heizwendeln (11) mit ihren Versorgungsanschlüssen (12) sind aus dem Radius der Heizwendeln (11) herausgebogen und von einem im Abstand von der Spannhülse (Schalen 11c) angeordneten Schutzprofil (U-Profilschiene 13) abgedeckt. Das Schutzprofil weist eine Stellfläche (13a) als Standorgan auf. Dadurch ist die Plastifiziereinheit bei guter Energiebilanz und schnellem Regelverhalten beim Wechsel leichter zu handhaben.

Bei bekannten, mit üblichen Keramikheizkörpern (vergl. z.B. Prospekt Erge Elektrowärmetechnik Franz Messer, 8563 Schnaittach, Hersbrucker Straße 31; Prospekt Ihne & Tesch, 5880 Lüdenscheid, Am Drostenstück 18) ausgerüsteten Plastifiziereinheit dieser Art umfaßt die automatisch wechselbare Einheit einen mit dem Plastifizierzylinder fest verbundenen Kupplungsblock mit Kunststoff-Einzugskanal, der unter anderem als Standorgan für die abgekuppelte Plastifiziereinheit dient (EP-PS 0 069 221; DE-OS 32 29 223).

Bekannt sind auch Flachrohrheizkörper, die im gewerblichen Elektrowärme- und Apparatebau zur Luft- und Flüssigkeitserwärmung Anwendung finden und die sich auch zur Kontakterwärmung eignen. Diese an sich linearen Flachrohrheizkörper sind aus einem Flachrohr aus Chromnickelstahl und Heizleitern aufgebaut, die im Flachrohr in hochverdichtetem Magnesium-Oxid oder Magnesium-Silikat eingebettet sind. Sie sind daher in Anpassung an spezifische Anwendungserfordernisse biegbar (Prospekt ELTRA GmbH & Co. KG Leicht & Trambauer, Elektrowärmetechnik, Postfach 1120, D-6102 Pfungstadt; Prospekt Türk + Hillinger GmbH Elektrowärme, Friedrichstraße 21, D-7200 Tuttlingen). Obwohl in zahlreichen Anwendungsgebieten seit Jahrzehnten verhältnismäßig weit verbreitet, konnten die Flachrohrheizungen für den Aufbau von Plastifiziereinheiten keinen Eingang finden, wobei das Problem einer Abschirmung der heizleiterfreien Endabschnitte der Heizwendeln und der angeschlossenen Versorgungsleitungen des Plastifizierzylinders gegen Stoß- und Schlagbelastungen außerhalb der Hitzezone eine Rolle spielte. Der Erfindung liegt die Aufgabe zugrunde, eine Plastifiziereinheit der eingangs genannten Gattung derart weiterzubilden, daß sie bei guter Energiebilanz und schnellem Regelverhalten beim Wechsel leichter zu handhaben ist.

Diese Aufgabe wird durch die im Patentanspruch 1 genannten Merkmale gelöst.

Bei einer solchen Ausbildung ist die Plastifiziereinheit beim Wechsel in mehrfacher Hinsicht leichter zu handhaben, wobei eine bislang für diese Zwecke nicht einsetzbare und extrem hohe Plastifiziertemperaturen ermöglichende Widerstandsheizungen mit schnellem Regelverhalten Verwendung findet. Zum einen ist der unmittelbar kuppelbare Plastifizierzylinder vom Kupplungsblock befreit, was zu einer wesentlichen Gewichtsverminderung der auswechselbaren Einheit führt. Zum anderen vermag das Schutzprofil für die Versorgungsanschlüsse dank seiner spezifischen Ausbildung nach Abkupplung der Plastifiziereinheit sowohl als Standorgan als auch als Halterung für den Angriff der Transportmittel zu dienen.

Im übrigen schirmt das Schutzprofil einen Schutzraum ab, in welchem die Versorgungsanschlüsse der Heizwendeln von den ausgebogenen Endabschnitten der Heizwendeln frei tragend gehalten sind. Dadurch können die Versorgungsanschlüsse mit den flexiblen Versorgungsleitungen den Wärmedehnungen der Heizwendeln widerstandsfrei folgen.

Bei einer Ausbildung nach den Patentansprüchen 2, 4 ergibt sich ein einfacher, fertigungsfreundlicher Aufbau der als Schutzprofil dienenden, eine Stellfläche bildenden und die Halteorgane für den Transport aufweisenden U-Profilschiene.

Im übrigen begünstigt der Einsatz von Flachrohr-Heizkörpern eine rationelle Serienfertigung, weil diese Flachrohr-Heizkörper in Anpassung an Plastifizierzylinder unterschiedlichen Durchmessers ohne nennenswerten Mehraufwand in unterschiedlicher lichter Weite gewendelt werden können.

Nachstehend wird die Erfindung anhand der Zeichnung an einem Ausführungsbeispiel erläutert.

Es zeigen:

Fig. 1          die Plastifiziereinheit in der vertikalen Symmetrieebene in Seitenansicht (Düse; Schalen der Spannhülsen und Schutzprofil), geschnitten,

Fig. 2, 3       die Plastifiziereinheit ind Rück- und Stirnansicht,

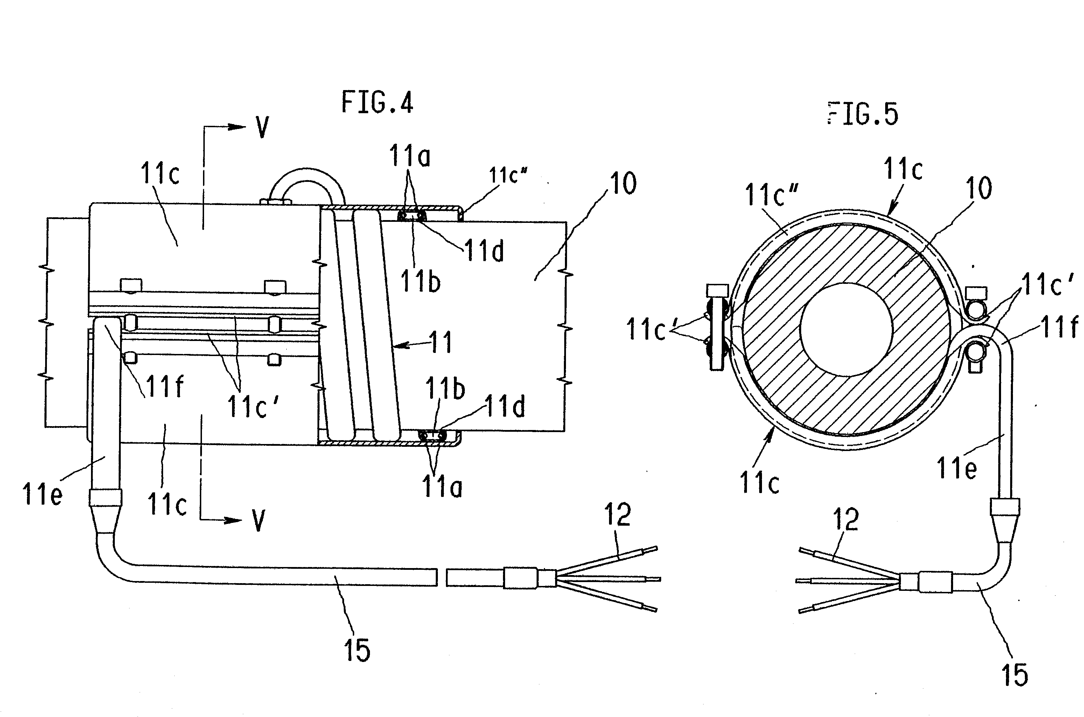

Fig. 4          einen Ausschnitt aus Fig. 1 in vergrößerter Darstellung,

Fig. 5          einen Schnitt nach Linie V-V von Fig. 4 (elektrische Anschlüsse (12) um 90° gedreht),

Fig. 6          einen Flachrohr-Heizkörper der Plastifiziereinheit mit seinem elektrischen Anschluß vor der Wendelung,

Fig. 7          einen Flachrohr-Heizkörper der Plastifiziereinheit im Querschnitt und

Fig. 8, 9       eine Heizwendel in Seiten- und Stirnansicht (inFig. 9 elektrische Anschlüsse um 90° gedreht).

Die Plastifiziereinheit ist für die mit einer Wechseleinrichtung zum Wechseln der Plastifiziereinheit ausgerüsteten Spritzgießeinheit einer Kunststoff- Spritzgießmaschine bestimmt und geeignet. Der Plastifizierzylinder 10 der Plastifiziereinheit ist mit mehreren unabhängig voneinander steuerbaren Widerstandsheizungen versehen. Als Widerstandsheizungen finden zu Heizwendeln 11 gebogene Flachrohr-Heizkörper Verwendung. Die Heizwendeln 11 sind dem zentripetalen Druck von Spannhülsen unterworfen. Die axial gespaltenen Spannhülsen sind durch Schalen 11c gebildet, die mit Hilfe von tangential angreifenden und diametral angeordneten Spannbolzen auf die Mantelfläche des Plastifiziers 10 aufpreßbar sind. Zu diesem Zweck sind die einander zugewandten Längsränder 11c' mit beiden eine Spannhülse bildenden Spannschalen 11c derart umgebogen, daß sie je einen zum Radius der zugehörigen Spannschale 11c einen gegensätzlichen Radius bilden. In den Längsrändern 11c' sind zylindrische Lagerstifte 25 von entsprechendem Radius eingelegt, die von den Spannbolzen 25 durchsetzt sind und mit diesen Spannbolzen 26 im Gewindeeingriff stehen. Heizleiterfreie Endabschnitte 11e der Heizwendeln 11 sind samt den Versorgungsleitungen 15 mit Versorgungsanschlüssen 12 aus dem Radius der Heizwendeln 11 herausgebogen und von einer im Abstand von den Spannschalen 11c angeordneten U- Profilschienen 13 abgedeckt, die als Schutzprofil dient. Die U- Profilschiene 13 ist als Standorgan ausgebildet. Das Standorgan ermöglicht ein Abstellen der von der Spritzgießeinheit abgekuppelten Plastifizziereinheit in stabiler Gleichgewichtslage. Im zeichnerisch dargestellten Ausführungsbeispiel ist der Steg der U- Profilschine 13 als eine plane Stellfläche 13a ausgebildet, die als Standorgan dient.

Der von der Spritzeinheit abgekuppelte Plastifizierzylinder 10 ist mittels horizontaler Stege 14 gehaltert, die in den vertikalen Wandungen der U- Profilschiene 13 abgestützt sind. In den Stegen 14 sind die vertikalen U- Schenkel von Spannbügeln 14a aufgenommen, welche den Plastifizierzylinder 10 umschließen.

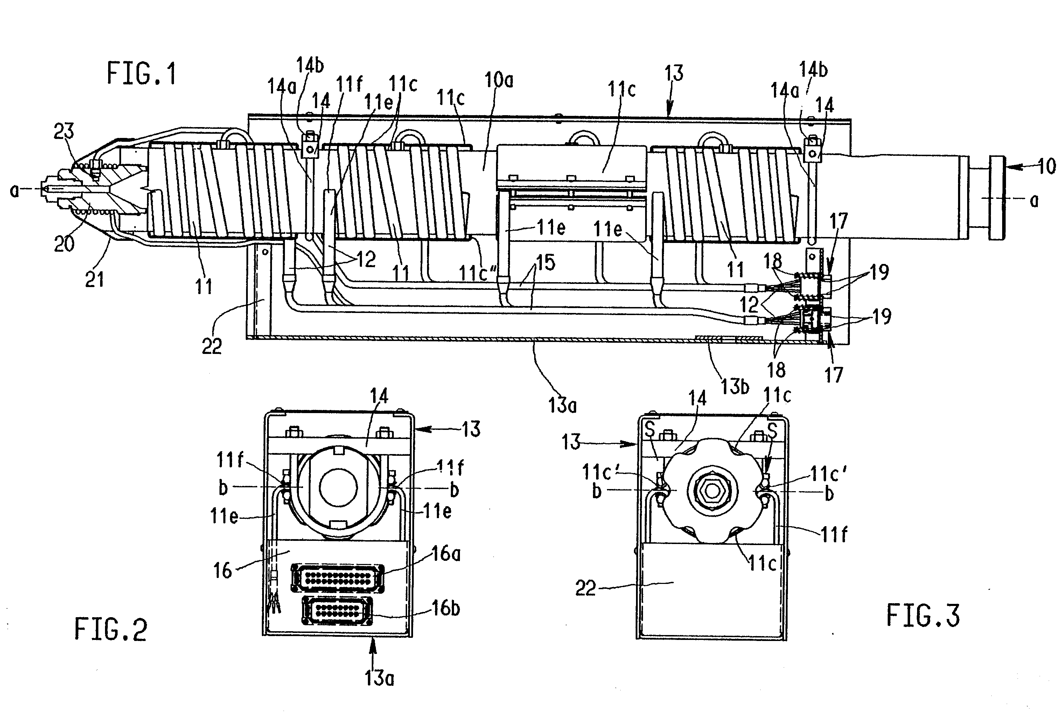

Wie insbesondere aus den Figuren 2 und 3 ersichtlich, sind die Endabschnitte 11e der Heizwendeln 11 je in einer durch die Zylinderachse a–a gehenden horizontalen Ebene b–b über eine zur Wendelkrümmung gegensätzliche, einen Radius 11f bildende Krümmung in die Vertikale abgebogen. Die Versorungsanschlüsse 12 sind von den ausgebogenen Endabschnitten 11e frei tragend gehalten. Dadurch können sie mit den angeschlossenen Anfangsabschnitten der flexiblen Versorgungsleitungen 15 den Wärmedehnungen der Heizwendeln 11 widerstandsfrei folgen, wobei sie sich in einem von der U- Profilschine 13 abgeschirmten Schutzraum befinden. Die U-Profilschine 13 ist mittels einer Deckplatte 13c zu einem sich beiderseits des Schwerpunktes der Plastifiziereinheit etwa gleich weit axial erstreckenden Rechteckrohr ergänzt. In diesem sind die Versorgungsleitungen 15 der Heizwendeln 11 zu einer rückseitigen vertikalen Steckerplatte 16 geführt. Die Stecker 17 der Versorgungsleitungen 15 sind auf horizontalen Lagerstiften 18 der Steckerplatte 16 begrenzt axial verschieblich gelagert. Dabei liegen sie unter der Wirkung vorgespannter Schraubenfedern 19 über Zentrierschultern an der Steckerplatte 16 an. Dadurch ist sichergestellt, daß Erschütterungen, insbesondere betriebsbedingte rhythmische axiale Erschütterungen der Plastifiziereinheit, die zum Beispiel durch die periodische Einspritzung des Kunststoffmaterials in die Spritzgießform verursacht werden, auf die Dauer keine zerstörenden Einflüsse auf die Kontaktanschlüsse der Versorgungsleitungen 15 ausüben können.

Als Halteorgane 13d für den Angriff der Transportmittel beim Wechsel der Plastifiziereinheit sind radialsymmetrische Zapfen an den vertikalen Wandungen der U- Profilschine 13 befestigt. Wie insbesondere aus Figur 1 ersichtlich, sind die Versorgungsanschlüsse 12 ausschließlich an einem axialen Ende, nämlich im heizleiterfreien Endabschnitt 11e jeder Heizwendel 11 angeordnet. Zudem sind die Heizwendeln paarweise derart spielsymmetrisch zueinander auf dem Plastifizierzylinder 10 angeordnet, daß die Endabschnitte 11e benachbarter Heizwendeln 11 einander zugewandt sind. Dadurch ist es möglich, die Endabschnitte 11e der benachbarten Heizwendeln in einem gemeinsamen, von Spannschalen 11c nicht besetzten axialen Abschnitt des Plastifizierzylinders 10 aus ihren Heizwendeln 11 herauszubiegen und gewissermaßen für den Anschluß der zugehörigen Versorgungsleitungen 15 zu paaren.

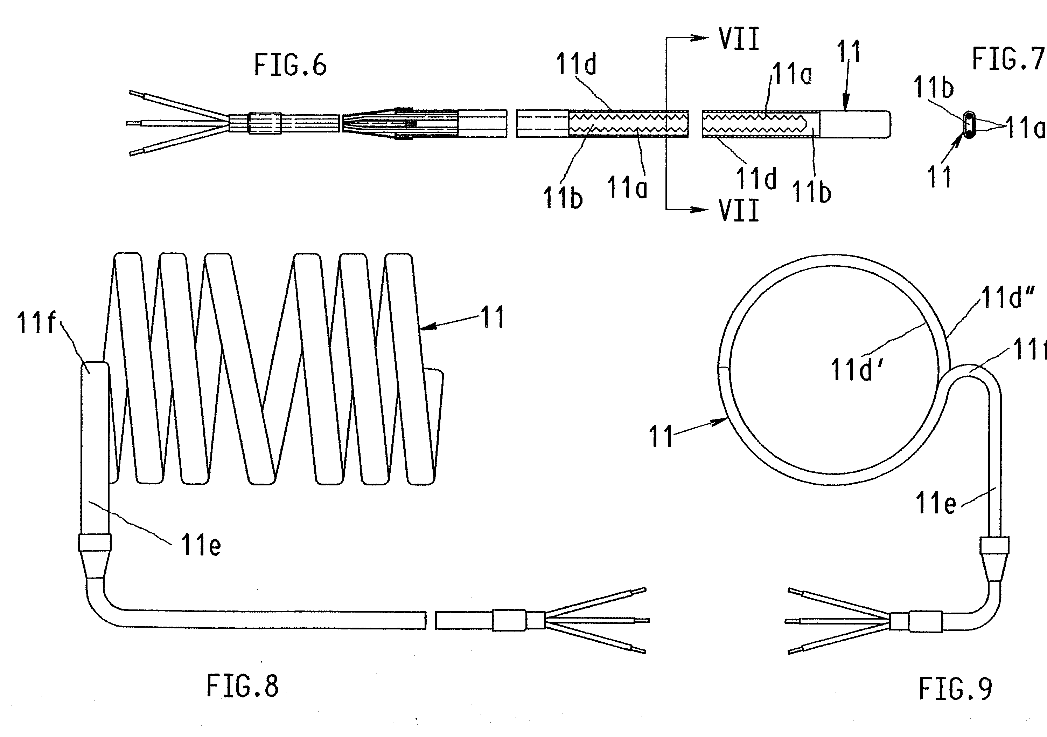

Wie insbesondere aus Figur 5 ersichtlich, sind die aus Chrom- Nickelstahl gefertigten Flachrohre der die Heizwendeln 11 bildenden Flachrohr-Heizungen mit einer pulverartigen keramischen Masse, vorzugsweise mit Magnesium– Oxyd oder Magnesium– Silicat gefüllt. In dem Magnesium–
Oxyd bzw. Silicat sind die gewendelten Heizleiter 11a eingebettet.
Die lichte Weite der Heizwendeln 11 entspricht dem Durchmesser des
Plastifizierzylinders. Die Wandung des zweiseitig symmetrischen
Flachrohres 11d des je eine Heizwendel 11 bildenden Flachrohr- Heizkörpers ist durch Flachdrücken derart verformt, daß seine der Zylinderachse a–a zugewandte Seite als kontaktierende Breitseite d'
etwa ein Drittel der gesamten Oberfläche des Flachrohres ausmacht.
Die kontaktierende Breitseite 11d' ist unter dem zentripetalen
Druck der Spannschalen 11c auf die Mantelfläche des Plastifizierzylinders 1o augepreßt. Dabei liegt die innere Mantelfläche dieser Spannschalen 11c auf einer äußeren Breitseite 11e" des Flachrohres 11d
auf, die parallel zu der kontaktierenden Breitseitie 11d' verläuft.
Die stirnseitigen Ränder 11c" der Spannschalen 11c sind nach innen
abgebördelt. Die Stirnkanten 11c'" dieser Ränder 11c" laufen im
gleichmässigen Abstand zur Mantelfläche des Plastifizierzylinders
10. Wie insbesondere aus Figur 1 erkennbar, weisen die Heizwendeln 11
mittig je eine Windung größerer Steigung auf. Im axialen Abschnitt
dieser Windung größerer Steigung ist am Plastifizierzylinder 10 eine
Bohrung 23 für einen Thermofühler angeordnet.

Dank der verhältnissmässig großen Kontaktfläche der Heizwendeln 11,
welche durch die kontaktierende Breitseite 11d' gebildet ist, ergibt
sich eine verbesserte Wärmeleitung und demzufolge ein schnelles Regelverhalten der Widerstandsheizungen bei verhältnismässig geringem Energieverlust.

Die Stellfläche 13a der U- Profilschine 13 ist mit einem Gleitlager
24 bzw. mit einem Rollenlager für ein stationäres Stützelement 25
der Kunststoff-Spritzgießmaschine versehen. Zur Bildung einer Gleitbahn bzw. einer Rollenbahn ist das Gleitlager 24 mit einer Versteifungsarmierung 24a versehen. Das Stützelement 25 kann auf dem
Maschinenfuß der Spritzgießmaschine, am Formträger der Formschließeinheit oder von den Holmen der Spritzgießeinheit aufgenommen sein.
Eine solche Abstützung ist von besonderer Bedeutung bei sehr langen und schweren Plastifiziereinheiten zumal diese im Spritzbetrieb periodische axiale Bewegungen, zum Beispiel zwecks thermischer Trennung von der Spritzgießform ausführen.

Karl Hehl, Arthur-Hehl-Str. 32, D-7298 Loßburg 1

Plastifiziereinheit einer Kunststoff-Spritzgießmaschine.

P a t e n t a n s p r ü c h e

1. Plastifiziereinheit für die mit einer Wechseleinrichtung zum Wechseln der Plastifiziereinheit ausgerüsteten Spritzgießeinheit einer Kunststoff-Spritzgießmaschine,

mit einem Plastifizierzylinder mit mehreren unabhängig voneinander steuerbaren Widerstandsheizungen, deren Heizleiter in keramischen Isolierpackungen angeordnet sind, welche Widerstandsheizungen mittels axialer gespaltener Spannhülsen und tangential angreifender Spannelemente auf die Mantelfläche des Plastifizierzylinders aufpreßbar sind,

sowie mit Halteorganen für den Angriff der die Plastifiziereinheit beim Wechsel transportierenden Transportmittel der Wechseleinrichtung und mit einem Standorgan zum Abstellen der von der Spritzgießeinheit abgekuppel ten Plastifiziereinheit in stabiler Gleichgewichtslage,

dadurch gekennzeichnet, daß als Widerstandsheizungen zu Heizwendeln (11) gebogene, dem zentripetalen Druck der Spannhülsen (Schalen 11c) unterworfene Flachrohr- Heizkörper Verwendung finden,

daß heizleiterfreie Endabschnitte (11e) der Heizwendeln (11) mit ihren Versorgungsanschlüssen (12) aus dem Radius der Heizwendeln (11) herausgebogen und von einem im Abstand von der Spannhülse (Schalen 11c) angeordneten Schutzprofil (U-Profilschiene 13) abgedeckt sind,

und daß dieses Schutzprofil (U-Profilschiene 13) als das Standorgan (Stellfläche 13a) ausgebildet ist.


2. Plastifiziereinheit nach Patentanspruch 1, dadurch gekennzeichnet, daß der Steg einer U-Profilschiene (13) eine plane Stellfläche (13a) bildet, wobei der von der Spritzgießeinheit abgekuppelte Plastifizierzylinder (10) mittels horizontaler Stege (14) gehaltert ist, die in vertikalen Wandungen der U-Profilschiene (13) abgestützt sind und in welchen die vertikalen U-Schenkel von Spannbügeln (14a) aufgenommen sind, welche den Plastifizierzylinder (10) umschließen.

3. Plastifiziereinheit nach Patentanspruch 1 oder 2, dadurch gekennzeichnet, daß die Endabschnitte (11e) der Heizwendeln (11) je in einer durch die Zylinderachse (a-a) gehenden horizontalen Ebene (b-b) über eine zur Wendelkrümmung gegensätzliche Krümmung (Radius 11f) in die Vertikale abgebogen sind.

4. Plastifiziereinheit nach Patentanspruch 2 oder 3, dadurch gekennzeichnet, daß die U-Profilschiene (13) mittels einer Deckplatte (13c) zu einem sich beiderseits des Schwerpunktes der Plastifiziereinheit etwa gleich weit axial erstreckenden Rechteckrohr ergänzt ist, in welchem Versorgungsleitungen (15) der Heizwendeln (11) zu einer rückseitigen vertikalen Steckerplatte (16) geführt sind und das mit den Halteorganen (13d) versehen ist.

5. Plastifiziereinheit nach Patentanspruch 4, dadurch gekennzeichnet, daß die Stecker (17) der Versorgungsleitungen (15) auf horizontalen Lagerstiften (18) der Steckerplatte (16) begrenzt axial verschieblich gelagert sind und unter der Wirkung vorgespannter Schraubenfedern (19) über Zentrierschultern an der Steckerplatte (16) anliegen.

6. Plastifiziereinheit nach einem der vorhergehenden Patentansprüche, dadurch gekennzeichnet, daß als Halteorgane (13d) radialsymmetrische Zapfen bei horizontaler Achse an vertikalen Wandungen des Schutzprofils (U-Profilschiene 13) befestigt sind.

7. Plastifiziereinheit nach einem der vorhergehenden Patentansprüche, dadurch gekennzeichnet, daß die Spannhülsen je aus zwei identischen Schalen (11c) gebildet sind.

8. Plastifiziereinheit nach einem der vorhergehenden Patentansprüche, dadurch gekennzeichnet, daß die Versorgungsanschlüsse (12) ausschließlich an einem Ende (Endabschnitt 11e) jeder Heizwendel (11) angeordnet und die Heizwendeln (11) paarweise derart spiegelsymmetrisch zueinander auf dem Plastifizierzylinder (10) angeordnet sind, daß die Endabschnitte (11e) benachbarter Heizwendeln (11) einander zugewandt sind.

9. Plastifiziereinheit nach einem der vorhergehenden Patentansprüche, dadurch gekennzeichnet, daß die kontaktierenden Breitseiten (11d') der Heizwendeln (11) etwa ein Drittel ihrer gesamten Oberfläche ausmachen.

10. Plastifiziereinheit nach einem der vorhergehenden Patentansprüche, dadurch gekennzeichnet, daß die Heizwendeln (11) je mittig eine Windung größerer Steigung aufweisen und im axialen Abschnitt dieser Windung am Plastifizierzylinder (10) je eine Bohrung (23) für einen Thermofühler angeordnet ist.

FIG.1

FIG.2

FIG.3

1/3

0 198 473

FIG.4

FIG.5

0 198 473

FIG.7

FIG.6

FIG.8

FIG.9